# EUROPEAN PATENT APPLICATION

(11) **EP 4 481 856 A1**
(43) Date of publication of application: **25.12.2024**
(21) Application number: 23765789.5
(22) Date of filing: 22.02.2023
(51) Int. Cl.: H01M 4/58, H01M 10/0525

(54) **LITHIUM IRON PHOSPHATE POSITIVE ELECTRODE ACTIVE MATERIAL, PREPARATION METHOD THEREFOR, AND LITHIUM ION BATTERY**

(30) Priority: 07.03.2022 CN 202210228274
(71) Applicant: BYD Company Limited, Shenzhen, Guangdong 518118 (CN)
(72) Inventor: WEN, Xin, Shenzhen, Guangdong 518118 (CN); GAO, Qingqing, Shenzhen, Guangdong 518118 (CN); CHEN, Sanzhi, Shenzhen, Guangdong 518118 (CN); HAO, Rong, Shenzhen, Guangdong 518118 (CN)
(74) Representative: Arnold & Siedsma
(86) International application number: PCT/CN2023/077668
(87) International publication number: WO 2023/169211

(57) **Abstract**

A lithium iron phosphate positive electrode active material, a preparation method thereof, and a lithium-ion battery are provided. The positive electrode active material is formed by mixing a first and a second lithium iron phosphate material. When the volume distribution percentages of the first and second lithium iron phosphate material reach a maximum value, the corresponding particle sizes are D¹ₘₒ µm and D²ₘₒ µm respectively, and 0.3≤D¹ₘₒ≤3.2, 1≤D²ₘₒ≤5, and D¹ₘₒ <D²ₘₒ. The discreteness in particle size distribution of the first and second lithium iron phosphate material is A₁ and A₂ respectively, and 1≤A₁≤3, 2≤A₂≤4, 4.07 <A₁ x (2.31+D¹ₘₒ) <16, and -0.4<A₂ x (D²ₘₒ-1.15) <14.

## Description

### CROSS-REFERENCE TO RELATED APPLICATIONS

The present disclosure claims priority to Chinese Patent Application No. 202210228274.0 filed on March 07, 2022 and entitled "Lithium iron phosphate positive electrode active material, preparation method thereof, positive electrode sheet and lithium-ion battery", which is incorporated herein by reference in its entirety.

### FIELD

The present disclosure relates to the field of lithium-ion batteries, and specifically to a lithium iron phosphate positive electrode active material, a preparation method thereof, and a lithium-ion battery.

### BACKGROUND

Lithium iron phosphate material has wide use due to the high safety, low cost, environmental friendliness and other advantages. However, the lithium iron phosphate material also has an obvious defect. The maximum compaction density is low (2.1-2.5 g/cm³), which leads to the low energy density of batteries prepared with the lithium iron phosphate material, so the demand for batteries with long battery life cannot be met. To improve the energy density of the battery, a lithium iron phosphate material having high compaction density has become a popular direction of development in the industry. However, for the lithium iron phosphate material having a high compaction density, when the compaction density of the lithium is increased, the electrochemical performance of the battery is often reduced.

### SUMMARY

To solve the above technical problems, the present disclosure provides a lithium iron phosphate positive electrode active material, a preparation method thereof, and a lithium-ion battery. By adjusting the particle size parameter of two constituent lithium iron phosphate materials, the positive electrode active material obtained by mixing the two materials at any ratio is allowed to have a high compaction density, and a battery prepared therewith has excellent electrochemical performance.

Particularly, in a first aspect, the present disclosure provides a lithium iron phosphate positive electrode active material. The lithium iron phosphate positive electrode active material is formed by mixing a first lithium iron phosphate material and a second lithium iron phosphate material. When the volume distribution percentage of the first lithium iron phosphate material reaches a maximum value, the corresponding particle size is D¹ₘₒ µm, and 0.3≤D¹ₘₒ≤3.2. When the volume distribution percentage of the second lithium iron phosphate material reaches a maximum value, the corresponding particle size is D²ₘₒ µm, 1≤D²ₘₒ≤5, and D¹ₘₒ <D²ₘₒ. The discreteness in particle size distribution of the first lithium iron phosphate material is A₁, and the discreteness in particle size distribution of the second lithium iron phosphate material is A₂, where 1≤A₁≤3, and 2≤A₂≤4. D¹ₘₒ and A₁ meet a relation formula of: 4.07 <A₁ x (2.31+D¹ₘₒ) <16. D²ₘₒ and A₂ meet a relation formula of: -0.4 <A₂ x (D²ₘₒ-1.15) <14.

The maximum compaction density of a positive electrode sheet containing the positive electrode active material can be 2.6 g/cm³ or higher, and a battery prepared therewith has excellent electrochemical performance.

According to the lithium iron phosphate positive electrode active material provided in the embodiment of the present disclosure, by defining the range of the particle size Dₘₒ, the range of the discreteness A in particle size distribution, and the range of the relation formula of Dₘₒ and A of the two constituent lithium iron phosphate materials a positive electrode sheet prepared with the positive electrode active material formed by mixing the two lithium iron phosphate materials at any ratio is ensured to have a high compaction density, and the compaction density is up to 2.6 g/cm³ or higher, which promotes the improvement of the energy density of a battery prepared with the positive electrode active material. In addition, the battery prepared with the positive electrode active material has excellent electrochemical performance, and particularly, the cycle performance is good.

In some embodiments, the value of D¹ₘₒ is in the range of: 0.31≤D¹ₘₒ≤2.5.

In some embodiments, the value of D¹ₘₒ is in the range of: 0.35≤D¹ₘₒ≤2.46.

In some embodiments, the value of D²ₘₒ is in the range of: 1.2≤D²ₘₒ≤4.5.

In some embodiments, the value of D²ₘₒ is in the range of: 1.25≤D²ₘₒ≤4.48.

In some embodiments, the mixing weight ratio of the first lithium iron phosphate material and the second lithium iron phosphate material is in the range of 1: (0.4-4).

In some embodiments, the mixing weight ratio of the first lithium iron phosphate material and the second lithium iron phosphate material is in the range of 1: (0.6-2.5).

In some embodiments, the mixing weight ratio of the first lithium iron phosphate material and the second lithium iron phosphate material is in the range of 1: (1-2.5).

In some embodiments, the first lithium iron phosphate material and the second lithium iron phosphate material have a carbon coating layer on the surface.

In some embodiments, D¹ₘₒ and A₁ meet a relation formula of: 4.08≤A₁ × (2.31+D¹ₘₒ) ≤15.9.

In some embodiments, D¹ₘₒ and A₁ meets a relation formula of: 4.11≤A₁ × (2.31+D¹ₘₒ) ≤15.86.

In some embodiments, D²ₘₒ and A₂ meet a relation formula of: -0.38≤A₂ x (D²ₘₒ-1.15) ≤13.95.

According to the lithium iron phosphate positive electrode active material provided in the first aspect of the present disclosure, the positive electrode active material is formed by mixing two lithium iron phosphate materials meeting the requirements of specific particle size parameters at any ratio, the compaction density of a positive electrode sheet prepared with the positive electrode active material is high, and a battery prepared therewith has good cycle performance and rate performance.

In a second aspect, the present disclosure provides a method for preparing a lithium iron phosphate positive electrode active material. The method includes the following steps: A first lithium iron phosphate material and a second lithium iron phosphate material are provided. When the volume distribution percentage of the first lithium iron phosphate material reaches a maximum value, the corresponding particle size is D¹ₘₒ µm, and 0.3≤D¹ₘₒ≤3.2. When the volume distribution percentage of the second lithium iron phosphate material reaches a maximum value, the corresponding particle size is D²ₘₒ µm, 1≤D²ₘₒ≤5, and D¹ₘₒ <D²ₘₒ. The discreteness in particle size distribution of the first lithium iron phosphate material is A₁, and the discreteness in particle size distribution of the second lithium iron phosphate material is A₂, where 1≤A₁≤3, and 2≤A₂≤4. D¹ₘₒ and A₁ meet a relation formula of: 4.07 <A₁ × (2.31+D¹ₘₒ) <16. D²ₘₒ and A₂ meet a relation formula of: -0.4 <A₂ × (D²ₘₒ-1.15) <14. The first lithium iron phosphate material and the second lithium iron phosphate material are mixed, to obtain the lithium iron phosphate positive electrode active material.

In the method for preparing a lithium iron phosphate positive electrode active material, two lithium iron phosphate materials meeting the requirements of specific particle size parameters are mixed at any ratio, to ensure that the obtained positive electrode active material has a high compaction density, and a battery prepared with the positive electrode active material has good cycle performance and rate performance. The preparation method has simple process, and is easy to operate, thus being suitable for use in large-scale production.

In a third aspect, the present disclosure provides a lithium-ion battery. The lithium-ion battery includes a positive electrode sheet. The positive electrode sheet includes a lithium iron phosphate positive electrode active material according to the first aspect of the present disclosure, or a lithium iron phosphate positive electrode active material prepared according to the method as described in the second aspect of the present disclosure.

In some embodiments, the lithium-ion battery further includes a negative electrode sheet, and an electrolyte solution and a separator located between the positive electrode sheet and the negative electrode sheet.

In some embodiments, the positive electrode sheet includes a positive electrode current collector and a positive electrode active material layer arranged on a surface of the positive electrode current collector.

In some embodiments, the positive electrode active material layer includes the lithium iron phosphate positive electrode active material, a binder, and a conductive agent.

In some embodiments, the positive electrode current collector includes any one of an aluminum foil, a carbon coated aluminum foil, and a perforated aluminum foil.

In some embodiments, the conductive agent includes at least one of carbon nanotubes, graphene, carbon black, and carbon fiber.

In some embodiments, the maximum compaction density of the positive electrode sheet is larger than 2.6 g/cm³.

The lithium-ion battery using the positive electrode sheet has high energy density and excellent cycle performance.

### BRIEF DESCRIPTION OF THE DRAWINGS

FIG. 1 shows a cycle performance curve of each pouch battery in Embodiments 1 to 5 and Comparative Embodiments 1 and 2 of the present disclosure.
Fig. 2 is a process flow chart of a method for preparing a lithium iron phosphate positive electrode active material according to an embodiment of the present disclosure.

### DETAILED DESCRIPTION

The present disclosure provides a lithium iron phosphate positive electrode active material, a preparation method thereof, and a lithium-ion battery. By adjusting the particle size parameter of two constituent lithium iron phosphate materials, the positive electrode active material obtained by mixing the two materials at any ratio is allowed to have a high compaction density, and a battery prepared therewith has excellent electrochemical performance.

In a first aspect, the present disclosure provides a lithium iron phosphate positive electrode active material. The lithium iron phosphate positive electrode active material is formed by mixing a first lithium iron phosphate material and a second lithium iron phosphate material. When the volume distribution percentage of the first lithium iron phosphate material reaches a maximum value, the corresponding particle size is D¹ₘₒ µm, and 0.3≤D¹ₘₒ≤3.2. When the volume distribution percentage of the second lithium iron phosphate material reaches a maximum value, the corresponding particle size is D²ₘₒ µm, 1≤D²ₘₒ≤5, and D¹ₘₒ <D²ₘₒ. The discreteness in particle size distribution of the first lithium iron phosphate material is A₁, and the discreteness in particle size distribution of the second lithium iron phosphate material is A₂, where 1≤A₁≤3, and 2≤A₂≤4. D¹ₘₒ and A₁ meet a relation formula of: 4.07 <A_{1 ×} (2.31+D¹ₘₒ) <16. D²ₘₒ and A₂ meet a relation formula of: -0.4 <A₂ x (D²ₘₒ-1.15) <14.

The maximum compaction density of a positive electrode sheet containing the positive electrode active material can be 2.6 g/cm³ or higher, and a battery prepared therewith has excellent electrochemical performance.

According to the lithium iron phosphate positive electrode active material provided in the present disclosure, by defining the range of the particle size Dₘₒ, the range of the discreteness A in particle size distribution, and the range of the relevant relation formula of Dₘₒ and A of the two constituent lithium iron phosphate materials, a positive electrode sheet prepared with the positive electrode active material formed by mixing the two lithium iron phosphate materials at any ratio is ensured to have a high compaction density that is 2.6 g/cm³ or higher, which promotes the improvement of the energy density of a battery prepared with the positive electrode active material. In addition, the battery prepared with the positive electrode active material has excellent electrochemical performance, particularly cycle performance. In some embodiments, 4.08≤A₁ × (2.31+D¹ₘₒ) ≤15.9. In some embodiments, A₁ × (2.31+D¹ₘₒ) is in the range of 4.11-15.86.

In some embodiments, -0.38≤A₂ x (D²ₘₒ-1.15) ≤13.95.

In some embodiments, the D¹ₘₒ value of the first lithium iron phosphate material and the D²ₘₒ value of the second lithium iron phosphate material can be obtained from their respective laser particle size distribution diagrams. Specifically, the test instrument is a laser particle size analyzer (such as Malvern 3000). The test method can be found in GB/T 19077-2016/ISO 13320:2009 Particle size analysis-Laser diffraction methods.

In some embodiments, the discreteness in particle size distribution of the first lithium iron phosphate material is A₁=(D¹₉₀-D¹₁₀)/D¹₅₀, and the discreteness in particle size distribution of the second lithium iron phosphate material is: A₂=(D²₉₀-D²₁₀/D²₅₀, D¹₉₀ represents the corresponding particle size when the cumulative volume distribution percentage is 90% in the laser particle size distribution diagram of the first lithium iron phosphate material; D¹₁₀ represents the corresponding particle size when the cumulative volume distribution percentage of the first lithium iron phosphate material is 10%; and D¹₅₀ represents the corresponding particle size when the cumulative volume distribution percentage of the first lithium iron phosphate material is 50%. A smaller A₁ represents a smaller discreteness in particle size distribution (or narrower width of particle size distribution) of the first lithium iron phosphate material and a higher concentration in particle size distribution. Similarly, D²₉₀, D²₁₀, and D²₅₀ respectively represent the corresponding particle sizes when the cumulative volume distribution percentages reach 90%, 10%, and 50% respectively in the laser particle size distribution diagram of the second lithium iron phosphate material. The D¹₉₀, D¹₁₀, and D¹₅₀ values of the first lithium iron phosphate material and the D²₉₀, D²₁₀, and D²₅₀ values of the second lithium iron phosphate material can also be obtained from their laser particle size distribution diagrams. The test method can be found in GB/T 19077-2016/ISO 13320:2009 Particle size analysis-Laser diffraction methods.

In some embodiments, D¹ₘₒ<D²ₘₒ. When D¹ₘₒ of the lithium iron phosphate material is small, the lithium-ion diffusion path is relatively short, and the prepared battery has good electrical performance. When D²ₘₒ of the lithium iron phosphate material is large, the compaction density of the positive electrode active material can be increased. Given a particle size Dₘₒ that is in the above range, in combination with the ranges of A₁ and A₂, and relation formulas there between, the two lithium iron phosphate materials can be ensured to form a dense packing when they are mixed uniformly at any ratio, so that the compaction density of a positive electrode sheet prepared with the positive electrode active material prepared therewith can be increased, without compromising the cycle performance of the battery.

In some embodiments, the value of D¹ₘₒ is in the range of: 0.31≤D¹ₘₒ≤2.5. Further, the value of D¹ₘₒ is in the range of: 0.35≤D¹ₘₒ≤2.46.

In some embodiments, the value of D²ₘₒ is in the range of: 1.2≤D²ₘₒ≤5. Further, the value of D²ₘₒ is in the range of: 1.2≤D²ₘₒ≤4.5. Still further, the value of D² ₘₒ is in the range of: 1.25≤D²ₘₒ≤4.48.

When the D¹ₘₒ and D²ₘₒ values are in the above ranges and meet D¹ₘₒ<D²ₘₒ, the two lithium iron phosphate materials can well ensure the high compaction density of the positive electrode sheet and the good electrochemical performance of the battery.

In some embodiments, the mixing weight ratio of the first lithium iron phosphate material and the second lithium iron phosphate material can be any ratio, the maximum compaction density of a positive electrode sheet prepared with the lithium iron phosphate positive electrode active material is high, and the cycle performance of a battery prepared therewith is good. In some embodiments, the mixing weight ratio of the first lithium iron phosphate material and the second lithium iron phosphate material is in the range of 1: (0.4-4), and further in the range of 1: (0.6-2.5), for example, in the range of 1: (1-2.5). In this case, the positive electrode active material formed by mixing the two lithium iron phosphate materials can well ensure the high compaction density of the electrode sheet and the good cycle performance of the battery.

In some embodiments, the first lithium iron phosphate material and the second lithium iron phosphate material may have a carbon coating layer on the surface, which can be obtained by sequentially sanding, spray drying and sintering a mixed slurry of a phosphorus source, an iron source, a lithium source and a carbon source. In the present disclosure, the specific preparation method of the two lithium iron phosphate materials is not limited. The presence of the carbon coating layer allows the first and the second lithium iron phosphate material to have good electrical conductivity, and less side reactions with the electrolyte solution. The positive electrode active material obtained by mixing the two has good electrical conductivity, and the cycle performance of the battery is good.

According to the lithium iron phosphate positive electrode active material provided in the first aspect of the present disclosure, the positive electrode active material is formed by mixing two lithium iron phosphate materials meeting the requirements of specific particle size parameters at any ratio, the compaction density of a positive electrode sheet prepared with the positive electrode active material is high, and a battery prepared therewith has good cycle performance and rate performance.

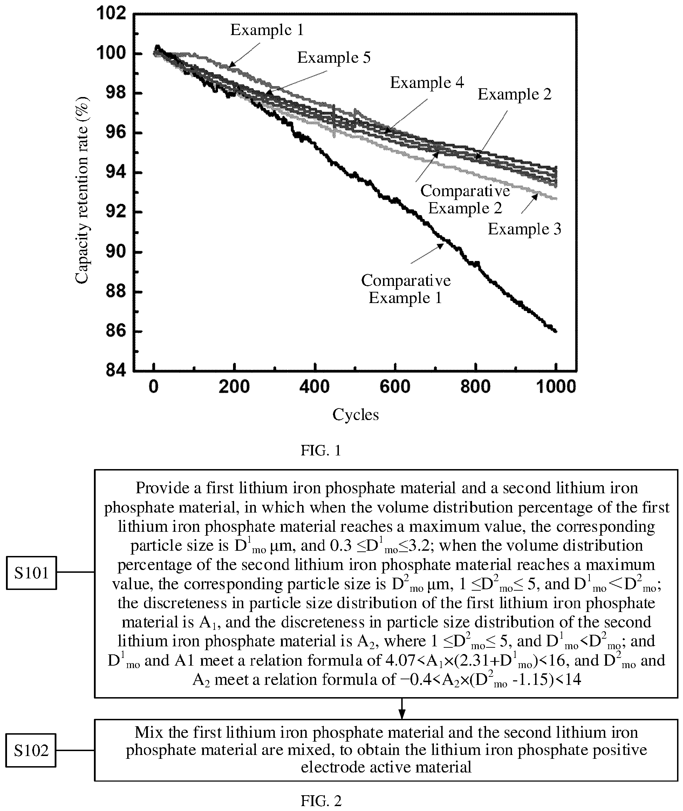

In a second aspect, the present disclosure provides a method for preparing a lithium iron phosphate positive electrode active material. As shown in FIG. 2, the method includes the following steps: S101: A first lithium iron phosphate material and a second lithium iron phosphate material are provided. When the volume distribution percentage of the first lithium iron phosphate material reaches a maximum value, the corresponding particle size is D¹ₘₒ µm, and 0.3≤D¹ₘₒ≤3.2. When the volume distribution percentage of the second lithium iron phosphate material reaches a maximum value, the corresponding particle size is D²ₘₒ µm, 1≤D²ₘₒ≤5, and D¹ₘₒ <D²ₘₒ. The discreteness in particle size distribution of the first lithium iron phosphate material is A₁, and the discreteness in particle size distribution of the second lithium iron phosphate material is A₂, where 1≤A₁≤3, and 2≤A₂≤4. D¹ₘₒ and A₁ meet a relation formula of: 4.07 <A₁ × (2.31+D¹ₘₒ) <16. D²ₘₒ and A₂ meet a relation formula of: -0.4 <A₂ x (D²ₘₒ-1.15) <14. S102: The first lithium iron phosphate material and the second lithium iron phosphate material are mixed, to obtain the lithium iron phosphate positive electrode active material.

In the method for preparing a lithium iron phosphate positive electrode active material, two lithium iron phosphate materials meeting the requirements of specific particle size parameters are mixed at any ratio, to ensure that the obtained positive electrode active material has a high compaction density, and a battery prepared with the positive electrode active material has good cycle performance and rate performance. The preparation method has simple process, and is easy to operate, thus being suitable for use in large-scale production.

A positive electrode sheet is provided. The positive electrode sheet includes a lithium iron phosphate positive electrode active material according to the first aspect of the present disclosure, or a lithium iron phosphate positive electrode active material prepared according to the method as described in the second aspect of the present disclosure.

In some embodiments, the positive electrode sheet includes a positive electrode current collector and a positive electrode active material layer arranged on a surface of the positive electrode current collector. The positive electrode active material layer includes the lithium iron phosphate positive electrode active material, a binder, and a conductive agent.

In some embodiments, the maximum compaction density of the positive electrode sheet is 2.6 g/cm³ or higher. In some embodiments, the maximum compaction density is 2.62-2.8 g/cm³, and further 2.65-2.75 g/cm³. It is to be understood that the maximum compaction density of the positive electrode sheet refers to the corresponding compaction density of the electrode sheet when the active material particles in the positive electrode sheet are crushed under a certain pressure.

The positive electrode material layer can be formed by coating a positive electrode paste including the lithium iron phosphate positive electrode active material, the conductive agent, the binder and a solvent on the positive electrode current collector. The solvent can be one or more of N- methylpyrrolidone (NMP), acetone and dimethyl acetamide (DMAC). The positive electrode current collector includes any one of an aluminum foil, a carbon-coated aluminum foil and a perforated aluminum foil. The conductive agent includes, but is not limited to, one or more of carbon nanotubes, graphene, carbon black, carbon fiber and the like. The binder includes, but is not limited to, one or more of polyvinylidene fluoride (PVDF), polytetrafluoroethylene (PTFE), polyvinyl alcohol (PVA), styrene-butadiene rubber (SBR), polyacrylic acid (PAA), polyacrylate, polyacrylonitrile (PAN), sodium carboxymethyl cellulose (CMC) and sodium alginate.

In a third aspect, the present disclosure provides a lithium-ion battery. The lithium-ion battery includes a positive electrode sheet according to the third aspect of the present disclosure.

In some embodiments, the lithium-ion battery further includes a negative electrode sheet, and an electrolyte solution and a separator located between the positive electrode sheet and the negative electrode sheet.

The lithium-ion battery using the positive electrode sheet has high energy density and excellent cycle performance.

The following descriptions are some implementations of the present disclosure. It should be noted that several improvements and modifications can be made by those of ordinary skill in the art without departing from the principle of the present disclosure, which shall fall within the protection scope of the present disclosure.

In the following, the technical solution of the present disclosure will be described in combination with specific embodiments.

### Exemplary Example 1

A method for preparing a lithium iron phosphate positive electrode active material (referred to as positive electrode active material hereinafter) includes the following steps.

A first lithium iron phosphate material LFP-1 was used. When the volume distribution percentage of LFP-1 reached a maximum value, the corresponding particle size was 0.31 µm, and the discreteness in particle size distribution was 2.22. That is, D¹ₘₒ was 0.31, A₁ was 2.22, and A₁ × (2.31+D¹ₘₒ) =5.82. A second lithium iron phosphate material LFP-2 was used. When the volume distribution percentage of LFP-2 reached a maximum value, the corresponding particle size was 1.28 µm, and the discreteness in particle size distribution was 2.24. That is, D²ₘₒ was 1.28, A₂ was 2.24, and A₂ x (D²ₘₒ-1.15) =0.29.

The LFP-1 material and the LFP-2 material were mixed at a weight ratio of 2: 8, to obtain a lithium iron phosphate positive electrode active material LFP-3.

The lithium iron phosphate positive electrode active material LFP-3 was prepared into a positive electrode sheet as follows. The LFP-3 material was mixed with a conductive agent-carbon nanotubes, a binder (specifically, polyvinylidene fluoride (PVDF)) and a solvent N-methylpyrrolidone (NMP) at a weight ratio of 100:3:2:60, and mixed uniformly, to obtain a positive electrode paste. The positive electrode paste was coated on two sides of a carbon-coated aluminum foil, and dried, to obtain a two-sided positive electrode sheet having an areal density of 360 g/m². The maximum compaction density of the positive electrode sheet without particle breakage was determined. The maximum compaction density of the positive electrode sheet was 2.70 g/cm³.

Preparation of pouch lithium-ion battery: A negative electrode plate was provided, which was prepared by coating a mixed paste containing graphite: conductive agent (carbon black): binder (specifically SBR): water =100:2:5:120 (weight ratio) on a copper foil, and drying. A positive electrode sheet prepared with the positive electrode active material LFP-3 in Example 1 was used as a positive electrode. A polypropylene film was used as a separator. A solution containing 1.0 mol/L LiPF₆ in ethylene carbonate (EC): dimethyl carbonate (DMC)=1:1 (volume ratio) was used as an electrolyte solution. After assembly, a pouch lithium-ion battery was obtained.

### Exemplary Example 2

A method for preparing a lithium iron phosphate positive electrode active material was different from the method in Example 1 in that the LFP-1 material and the LFP-2 material were mixed at a weight ratio of 4:6. The other steps were the same as those in Example 1. A lithium iron phosphate positive electrode active material LFP-3 was obtained.

Following the method described in Example 1, the lithium iron phosphate positive electrode active material LFP-3 obtained in Example 2 was prepared into a positive electrode sheet, and assembled into a pouch lithium-ion battery. The maximum compaction density of the positive electrode sheet in Example 2 was determined to be 2.68 g/cm³.

### Exemplary Example 3

A method for preparing a lithium iron phosphate positive electrode active material includes the following steps:
A first lithium iron phosphate materialLFP-1 was used. When the volume distribution percentage of LFP-1 reached a maximum value, the corresponding particle size was 3.12 µm, and the discreteness in particle size distribution was 2.92. That is, D¹ₘₒ was 3.12, A₁ was 2.92, and A₁ × (2.31+D¹ₘₒ) =15.86. A second lithium iron phosphate material LFP-2 was used. When the volume distribution percentage of LFP-2 reached a maximum value, the corresponding particle size was 4.93 µm, and the discreteness in particle size distribution was 3.69. That is, D²ₘₒ was 4.93, A₂ was 3.69, and A₂ × (D²ₘₒ-1.15) =13.95.

The LFP-1 material and the LFP-2 material were mixed at a weight ratio of 5: 5. A lithium iron phosphate positive electrode active material LFP-3 was obtained.

Following the method described in Example 1, the lithium iron phosphate positive electrode active material LFP-3 obtained in Example 3 was prepared into a positive electrode sheet, and assembled into a pouch lithium-ion battery. The maximum compaction density of the positive electrode sheet in Example 3 was determined to be 2.73 g/cm³.

### Exemplary Example 4

A method for preparing a lithium iron phosphate positive electrode active material includes the following steps:
A first lithium iron phosphate material LFP-1 was used. When the volume distribution percentage of LFP-1 reached a maximum value, the corresponding particle size was 1.41 µm, and the discreteness in particle size distribution was 2.32. That is, D¹ₘₒ was 1.41, A₁ was 2.32, and A₁ × (2.31+D¹ₘₒ) =8.63. A second lithium iron phosphate material LFP-2 was used. When the volume distribution percentage of LFP-2 reached a maximum value, the corresponding particle size was 3.36 µm, and the discreteness in particle size distribution was 2.58. That is, D²ₘₒ was 3.36, A₂ was 2.58, and A₂ × (D²ₘₒ-1.15) =5.70.

The LFP-1 material and the LFP-2 material were mixed at a weight ratio of 3: 7. A lithium iron phosphate positive electrode active material LFP-3 was obtained.

Following the method described in Example 1, the lithium iron phosphate positive electrode active material LFP-3 obtained in Example 4 was prepared into a positive electrode sheet, and assembled into a pouch lithium-ion battery. The maximum compaction density of the positive electrode sheet in Example 4 was determined to be 2.68 g/cm³.

### Exemplary Example 5

A method for preparing a lithium iron phosphate positive electrode active material includes the following steps:
A first lithium iron phosphate material LFP-1 was used. When the volume distribution percentage reached a maximum value, the corresponding particle size was 2.46 µm, and the discreteness in particle size distribution was 2.16. That is, D¹ₘₒ was 2.46, A₁ was 2.16, and A₁ × (2.31+D¹ₘₒ) =10.30. A second lithium iron phosphate material LFP-2 was used. When the volume distribution percentage reached a maximum value, the corresponding particle size was 4.48 µm, and the discreteness in particle size distribution was 3.92. That is, D²ₘₒ was 4.48 µm, A₂ was 3.92, and A₂ × (D²ₘₒ-1.15) =13.05.

The LFP-1 material and the LFP-2 material were mixed at a weight ratio of 7: 3. A lithium iron phosphate positive electrode active material LFP-3 was obtained.

Following the method described in Example 1, the lithium iron phosphate positive electrode active material LFP-3 obtained in Example 5 was prepared into a positive electrode sheet, and assembled into a pouch lithium-ion battery. The maximum compaction density of the positive electrode sheet in Example 5 was determined to be 2.65 g/cm³.

### Exemplary Example 6

A method for preparing a lithium iron phosphate positive electrode active material includes the following steps:
A first lithium iron phosphate material LFP-1 was used. When the volume distribution percentage reached a maximum value, the corresponding particle size was 0.8 µm, and the discreteness in particle size distribution was 1.32. That is, D¹ₘₒ was 0.8, A₁ was 1.32, and A₁ × (2.31+D¹ₘₒ) =4.11. A second lithium iron phosphate material LFP-2 was used. When the volume distribution percentage reached a maximum value, the corresponding particle size was 1.65 µm, and the discreteness in particle size distribution was 3.6. That is, D²ₘₒ was 1.65, A₂ was 3.6, and A₂ x (D²ₘₒ-1.15) =1.8.

The LFP-1 material and the LFP-2 material were mixed at a weight ratio of 3: 7. A lithium iron phosphate positive electrode active material LFP-3 was obtained.

Following the method described in Example 1, the lithium iron phosphate positive electrode active material LFP-3 obtained in Example 6 was prepared into a positive electrode sheet, and assembled into a pouch lithium-ion battery. The maximum compaction density of the positive electrode sheet in Example 6 was determined to be 2.66 g/cm³.

### Exemplary Example 7

A method for preparing a lithium iron phosphate positive electrode active material includes the following steps:
A first lithium iron phosphate material LFP-1 was used. When the volume distribution percentage reached a maximum value, the corresponding particle size was 0.64 µm, and the discreteness in particle size distribution was 2.8. That is, D¹ₘₒ was 0.64, A₁ was 2.8, and A₁ x (2.31+D¹ₘₒ) =8.26. A second lithium iron phosphate material LFP-2 was used. When the volume distribution percentage reached a maximum value, the corresponding particle size was 1.02 µm, and the discreteness in particle size distribution was 2.94. That is, D²ₘₒ was 1.02, A₂ was 2.94, and A₂ x (D²ₘₒ-1.15) = -0.38;
The LFP-1 material and the LFP-2 material were mixed at a weight ratio of 6: 4. A lithium iron phosphate positive electrode active material LFP-3 was obtained.

Following the method described in Example 1, the lithium iron phosphate positive electrode active material LFP-3 obtained in Example 7 was prepared into a positive electrode sheet, and assembled into a pouch lithium-ion battery. The maximum compaction density of the positive electrode sheet in Example 7 was determined to be 2.65 g/cm³.

To highlight the beneficial effects of the present disclosure, the following Comparative Examples 1-6 are provided.

### Exemplary Comparative Example 1

A method for preparing a lithium iron phosphate positive electrode active material includes the following steps:

A first lithium iron phosphate material LFP-1 was used. When the volume distribution percentage reached a maximum value, the corresponding particle size was 0.35 µm (that is, D¹ₘₒ was 0.35), the discreteness A₁ in particle size distribution was 1.27, but A₁ × (2.31+D¹ₘₒ) =3.38, which fell outside the range of (4.07, 16) defined in the present disclosure. A second lithium iron phosphate material LFP-2 was used. When the volume distribution percentage reached a maximum value, the corresponding particle size was 1.03 µm (that is, D²ₘₒ was 1.03), the discreteness A₂ in particle size distribution was 3.87, but A₂ × (D²ₘₒ-1.15) = -0.46, which fell outside the range of (-0.4, 14) defined in the present disclosure.

The LFP-1 material and the LFP-2 material were mixed at a weight ratio of 1:1. A lithium iron phosphate positive electrode active material LFP-3 was obtained.

Following the method described in Example 1, the lithium iron phosphate positive electrode active material LFP-3 obtained in Comparative Example 1 was prepared into a positive electrode sheet, and assembled into a pouch lithium-ion battery. The maximum compaction density of the positive electrode sheet in Comparative Example 1 was determined to be 2.58 g/cm³.

### Exemplary Comparative Example 2

A lithium iron phosphate positive electrode material was provided, in which only one lithium iron phosphate material was used as the positive electrode active material. When the volume distribution percentage reached a maximum value, the corresponding particle size was 0.31 µm, and the discreteness A in particle size distribution was 1.92.

Following the method described in Example 1, the lithium iron phosphate positive electrode material obtained in Comparative Example 2 was prepared into a positive electrode sheet, and assembled into a pouch lithium-ion battery. The maximum compaction density of the pouch battery was 2.55 g/cm³.

### Exemplary Comparative Example 3

A method for preparing a lithium iron phosphate positive electrode active material includes the following steps:
A first lithium iron phosphate materialLFP-1 was used. When the volume distribution percentage reached a maximum value, the corresponding particle size was 0.35 µm (that is, D¹ₘₒ was 0.35), the discreteness A₁ in particle size distribution was 1.24, but A₁ × (2.31+D¹ₘₒ) = 3.30, which fell outside the range of (4.07, 16) defined in the present disclosure. A second lithium iron phosphate material LFP-2 was used. When the volume distribution percentage reached a maximum value, the corresponding particle size was 5.11 µm (that is, D²ₘₒ was 5.11), which fell outside the range of (1,5) defined in the present disclosure; the discreteness A₂ in particle size distribution was 3.78; and A₂ x (D²ₘₒ-1.15) = 14.97, which fell outside the range of (-0.4, 14) defined in the present disclosure.

The LFP-1 material and the LFP-2 material were mixed at a weight ratio of 2: 8. A lithium iron phosphate positive electrode active material LFP-3 was obtained.

Following the method described in Example 1, the positive electrode active material LFP-3 obtained in Comparative Example 3 was prepared into a positive electrode sheet, and assembled into a pouch battery. The maximum compaction density of the positive electrode sheet in Comparative Example 3 was determined to be 2.63 g/cm³. Although the maximum compaction density of the positive electrode sheet in Comparative Example 3 reached 2.6 g/cm³ or higher, the charge-discharge cycle stability of the battery was poor. As shown in Table 1 below, the first-cycle coulombic efficiency, the first-cycle discharge specific capacity, and the capacity retention rate after 1000 cycles of a battery having the positive electrode sheet in Comparative Example 3 were lower than those in Example 1.

### Exemplary Comparative Example 4

A method for preparing a lithium iron phosphate positive electrode active material includes the following steps:
A first lithium iron phosphate materialLFP-1 was used. When the volume distribution percentage reached a maximum value, the corresponding particle size was 0.46 µm (that is, D¹ₘₒ was 0.46), the discreteness A₁ in particle size distribution was 1.22, but A₁ x (2.31+D¹ₘₒ) = 3.38, which fell outside the range of (4.07, 16) defined in the present disclosure. A second lithium iron phosphate material LFP-2 was used, When the volume distribution percentage reached a maximum value, the corresponding particle size was 1.47 µm (that is, D²ₘₒ was 1.47), the discreteness A₂ in particle size distribution was 2.66, and A₂ x (D²ₘₒ-1.15) = 0.85, which fell outside the range of (-0.4,14) defined in the present disclosure.

The LFP-1 material and the LFP-2 material were mixed at a weight ratio of 3: 7. A lithium iron phosphate positive electrode active material LFP-3 was obtained.

Following the method described in Example 1, the lithium iron phosphate positive electrode active material LFP-3 obtained in Comparative Example 4 was prepared into a positive electrode sheet, and assembled into a pouch lithium-ion battery. The maximum compaction density of the positive electrode sheet in Comparative Example 4 was determined to be merely 2.57 g/cm³.

### Exemplary Comparative Example 5

A method for preparing a lithium iron phosphate positive electrode active material includes the following steps:
A first lithium iron phosphate materialLFP-1 was used. When the volume distribution percentage reached a maximum value, the corresponding particle size was 3.1 µm (that is, D¹ₘₒ was 3.1), which fell outside the range of 0.3-3.2 µm defined in the present disclosure; the discreteness A₁ in particle size distribution was 2.58; and A₁ × (2.31+D¹ₘₒ) = 13.96. A second lithium iron phosphate material LFP-2 was used. When the volume distribution percentage reached a maximum value, the corresponding particle size was 5.23 µm (that is, D²ₘₒ was 5.23), which fell outside the range of (1,5) defined in the present disclosure; the discreteness A₂ in particle size distribution was 3.29; and A₂ x (D²ₘₒ-1.15) = 13.42, which fell outside the range of (-0.4,14) defined in the present disclosure.

The LFP-1 material and the LFP-2 material were mixed at a weight ratio of 5: 5. A lithium iron phosphate positive electrode active material LFP-3 was obtained.

Following the method described in Example 1, the lithium iron phosphate positive electrode active material LFP-3 obtained in Comparative Example 5 was prepared into a positive electrode sheet, and assembled into a pouch lithium-ion battery. The maximum compaction density of the positive electrode sheet in Comparative Example 5 was determined to be 2.62 g/cm³. Although the maximum compaction density of the positive electrode sheet in Comparative Example 5 reached 2.6 g/cm³ or higher, the charge-discharge cycle stability of the battery was poor. As shown in Table 1 below, the first-cycle coulombic efficiency, the first-cycle discharge specific capacity, and the capacity retention rate after 1000 cycles of a battery having the positive electrode sheet in Comparative Example 5 were lower than those in Example 1.

### Exemplary Comparative Example 6

A method for preparing a lithium iron phosphate positive electrode active material includes the following steps:
A first lithium iron phosphate material LFP-1 was used, When the volume distribution percentage reached a maximum value, the corresponding particle size was 0.54 µm (that is, D¹ₘₒ was 0.54), the discreteness A₁ in particle size distribution was 1.87, and A₁ x (2.31+D¹ₘₒ) = 5.33. A second lithium iron phosphate material LFP-2 was used. When the volume distribution percentage reached a maximum value, the corresponding particle size was 1.12 µm (that is, D²ₘₒ was 1.12); the discreteness A₂ in particle size distribution was 1.61, which fell outside the range of 2 -4 defined in the present disclosure; and A₂ x (D²mo-1.15) = -0.05.

The LFP-1 material and the LFP-2 material were mixed at a weight ratio of 6: 4. A lithium iron phosphate positive electrode active material LFP-3 was obtained.

Following the method described in Example 1, the lithium iron phosphate positive electrode active material LFP-3 obtained in Comparative Example 6 was prepared into a positive electrode sheet, and assembled into a pouch lithium-ion battery. The maximum compaction density of the positive electrode sheet in Comparative Example 6 was determined to be 2.54g/cm³.

To provide powerful support for the beneficial effects of the present disclosure, the cycle performance of the pouch battery of each example and comparative example was tested. Each pouch battery was subjected to charge-discharge cycle test at 0.5C/0.5C at 25°C. The voltage range was 2.0-3.8 V. FIG. 1 shows a cycle performance curve of each pouch battery in Examples 1-5 and Comparative Examples 1-2. The first-cycle coulombic efficiency, the first-cycle discharge specific capacity, and the capacity retention rate after 1000 cycles of the batteries in examples and comparative examples are summarized in Table 1 below.

**Table 1**

| Test item | First-cycle coulombic efficiency (%) | First-cycle discharge specific capacity (mAh/g) | Capacity retention rate after 1000 cycles (%) |
|---|---|---|---|
| Example 1 | 95.2 | 141.5 | 93.8 |
| Example 2 | 94.4 | 140.8 | 93.8 |
| Example 3 | 94.8 | 141.4 | 92.7 |
| Example 4 | 95.5 | 140.9 | 94.1 |
| Example 5 | 94.7 | 141.3 | 94.3 |
| Example 6 | 94.3 | 140.6 | 93.4 |
| Example 7 | 95.0 | 141.3 | 93.7 |
| Comparative Example 1 | 93.7 | 138.6 | 86.0 |
| Comparative Example 2 | 94.6 | 140.2 | 93.5 |
| Comparative Example 3 | 94.9 | 138.7 | 88.2 |
| Comparative Example 4 | 94.4 | 140.6 | 93.1 |
| Comparative Example 5 | 93.8 | 139.2 | 87.4 |
| Comparative Example 6 | 94.2 | 140.4 | 93.5 |

As can be seen from FIG. 1 and Table 1, in Comparative Example 2 where only one lithium iron phosphate material was used as the positive electrode active material, although the charge-discharge cycle performance of the battery is good, the maximum compaction density of the electrode sheet is low, which is not conducive to the improvement of the energy density of the battery. When two lithium iron phosphate materials are mixed by the method provided in the present disclosure, the compaction density of the positive electrode sheet prepared with the positive electrode active material is high, and can be 2.6 g/cm³ or higher, and even 2.65-2.75 g/cm³ in some cases. Moreover, the battery has excellent electrochemical performance, high first-cycle discharge specific capacity, and high first-cycle coulombic efficiency, and the cycle performance (Examples 1-7) matches the cycle performance of the low-compaction-density battery in Comparative Example 2. However, when the positive electrode active material (Comparative Examples 1, and 3-6) obtained by mixing two raw materials that do not meet the specific requirements in the present disclosure is used, the compaction density of the electrode sheet is too low, for example, for example, in Comparative Examples 1-2, 4, and 6; or the compaction density can reach 2.6 g/cm³ or higher in some cases, but the charge-discharge cycle stability is poor, for example, in Comparative Examples 3 and 5. In general, high compaction density of the electrode sheet and good cycle performance cannot be achieved at the same time.

The foregoing embodiments show only several implementations of the present disclosure and are described in detail, which, however, are not to be construed as a limitation to the scope of the present disclosure. It is to be understood that for a person of ordinary skill in the art, several variations and improvements can be made by those of ordinary skill in the art without departing from the idea of the present disclosure, which are all contemplated in the protection scope of the present disclosure. Therefore, the protection scope of the present disclosure shall be defined by the appended claims.

## Claims

1. A lithium iron phosphate positive electrode active material, wherein the lithium iron phosphate positive electrode active material is formed by mixing a first lithium iron phosphate material and a second lithium iron phosphate material,
wherein when the volume distribution percentage of the first lithium iron phosphate material reaches a maximum value, the corresponding particle size is D¹ₘₒ µm, and 0.3≤D¹ₘₒ≤3.2; when the volume distribution percentage of the second lithium iron phosphate material reaches a maximum value, the corresponding particle size is D²ₘₒ µm, 1≤D²ₘₒ≤5, and D¹ₘₒ<D²ₘₒ;
the discreteness in particle size distribution of the first lithium iron phosphate material is A₁, and the discreteness in particle size distribution of the second lithium iron phosphate material is A₂, where 1≤A₁≤3, and 2≤A₂≤4; and
D¹ₘₒ and A₁ meet a relation formula of: 4.07<A₁ x (2.31+D¹ₘₒ) <16; and D²ₘₒ and A₂ meet a relation formula of: -0.4<A₂ x (D²ₘₒ-1.15) <14.

2. The lithium iron phosphate positive electrode active material according to claim 1, wherein the value of D¹ₘₒ is in the range of: 0.31≤D¹ₘₒ≤2.5.

3. The lithium iron phosphate positive electrode active material according to claim 1 or 2, wherein the value of D¹ₘₒ is in the range of: 0.35≤D¹ₘₒ≤2.46.

4. The lithium iron phosphate positive electrode active material according to any one of claims 1 to 3, wherein the value of D²ₘₒ is in the range of: 1.2≤D²ₘₒ≤4.5.

5. The lithium iron phosphate positive electrode active material according to any one of claims 1 to 4, wherein the value of D²ₘₒ is in the range of: 1.25≤D²ₘₒ≤4.48.

6. The lithium iron phosphate positive electrode active material according to any one of claims 1 to 5, wherein the mixing weight ratio of the first lithium iron phosphate material and the second lithium iron phosphate material is in the range of 1: (0.4-4).

7. The lithium iron phosphate positive electrode active material according to any one of claims 1 to 6, wherein the mixing weight ratio of the first lithium iron phosphate material and the second lithium iron phosphate material is in the range of 1: (0.6-2.5).

8. The lithium iron phosphate positive electrode active material according to any one of claims 1 to 7, wherein the mixing weight ratio of the first lithium iron phosphate material and the second lithium iron phosphate material is in the range of 1: (1-2.5).

9. The lithium iron phosphate positive electrode active material according to any one of claims 1 to 8, wherein the first lithium iron phosphate material and the second lithium iron phosphate material have a carbon coating layer on the surface.

10. The lithium iron phosphate positive electrode active material according to any one of claims 1 to 9, wherein D¹ₘₒ and A₁ meets a relation formula of: 4.08≤A₁ × (2.31+D¹ₘₒ) ≤15.9.

11. The lithium iron phosphate positive electrode active material according to any one of claims 1 to 10, wherein D¹ₘₒ and A₁ meet a relation formula of: 4.11≤A₁ × (2.31+D¹ₘₒ) ≤15.86.

12. The lithium iron phosphate positive electrode active material according to any one of claims 1 to 11, wherein D²ₘₒ and A₂ meet a relation formula of: -0.38≤A₂ x (D²ₘₒ-1.15) ≤13.95.

13. A method for preparing a lithium iron phosphate positive electrode active material, comprising:
(S101) providing a first lithium iron phosphate material and a second lithium iron phosphate material, wherein when the volume distribution percentage of the first lithium iron phosphate material reaches a maximum value, the corresponding particle size is D¹ₘₒ µm, and 0.3≤D¹ₘₒ≤3.2; when the volume distribution percentage of the second lithium iron phosphate material reaches a maximum value, the corresponding particle size is D²ₘₒ µm, 1≤D²ₘₒ≤5, and D¹ₘₒ<D²ₘₒ; the discreteness in particle size distribution of the first lithium iron phosphate material is A₁, and the discreteness in particle size distribution of the second lithium iron phosphate material is A₂, where 1≤A₁≤3, and 2≤A₂≤4; and D¹ₘₒ and A₁ meet a relation formula of: 4.07<A₁ × (2.31+D¹ₘₒ)<16; and D²ₘₒ and A₂ meet a relation formula of: -0.4 <A₂ x (D²ₘₒ-1.15) <14; and
(S102) mixing the first lithium iron phosphate material and the second lithium iron phosphate material, to obtain the lithium iron phosphate positive electrode active material.

14. A lithium-ion battery, the lithium-ion battery comprising a positive electrode sheet, the positive electrode sheet comprising a lithium iron phosphate positive electrode active material according to any one of claims 1 to 12, or the positive electrode sheet comprising a lithium iron phosphate positive electrode active material prepared by the method for preparing a lithium iron phosphate positive electrode active material according to claim 13.

15. The lithium-ion battery according to claim 14, further comprising a negative electrode sheet, and an electrolyte solution and a separator located between the positive electrode sheet and the negative electrode sheet.

16. The lithium-ion battery according to claim 14 or 15, wherein the positive electrode sheet comprises a positive electrode current collector and a positive electrode active material layer arranged on a surface of the positive electrode current collector.

17. The lithium-ion battery according to claim 16, wherein the positive electrode active material layer comprises the lithium iron phosphate positive electrode active material, a binder, and a conductive agent.

18. The lithium-ion battery according to claim 16 or 17, wherein the positive electrode current collector comprises one of an aluminum foil, a carbon coated aluminum foil, and a perforated aluminum foil.

19. The lithium-ion battery according to claim 17 or 18, wherein the conductive agent comprises at least one of carbon nanotubes, graphene, carbon black, and carbon fiber.

20. The lithium-ion battery according to any one of claims 14 to 19, wherein the maximum compaction density of the positive electrode sheet is larger than 2.6 g/cm³.
